# EUROPEAN PATENT APPLICATION

(11) **EP 1 645 984 A1**
(43) Date of publication of application: **12.04.2006**
(21) Application number: 05021826.2
(22) Date of filing: 06.10.2005
(51) Int. Cl.: G06F 21/00

(54) **Information processing apparatus, information processing method, and program**

(30) Priority: 08.10.2004 JP 2004295969
(71) Applicant: FeliCa Networks, Inc., Tokyo 141-0032 (JP)
(72) Inventor: Akashika, Hideki, c/o FeliCa Networks, Inc., Tokyo 141-0032 (JP); Ogishima, Jun, c/o FeliCa Networks, Inc., Tokyo 141-0032 (JP); Hanaki, Naofumi, c/o FeliCa Networks, Inc., Tokyo 141-0032 (JP)
(74) Representative: Körber, Martin Hans

(57) **Abstract**

An information processing apparatus (23) performing cryptographic processing for providing a service by using an integrated circuit chip includes an authentication unit (112) authenticating an operator operating an external device; a storage unit (113) storing an access control list that has identification information, identifying the operator, associated with information indicating the cryptographic processing permitted to the operator; a confirmation unit referring to the access control list to confirm whether the cryptographic processing requested from the authenticated operator is permitted; and a cryptographic processing unit (114) performing the cryptographic processing when the cryptographic processing requested from the operator is permitted.

## Description

### CROSS REFERENCES TO RELATED APPLICATIONS

The present invention contains subject matter related to Japanese Patent Application JP 2004-295969 filed in the Japanese Patent Office on October 08, 2004, the entire contents of which are incorporated herein by reference.

### BACKGROUND OF THE INVENTION

### 1. Field of the Invention

The present invention relates to information processing apparatuses, information processing methods, and programs. More particularly, the present invention relates to an information processing apparatus, an information processing method, and a program, which are capable of easily controlling (managing) operations, performed by operators being service providers, for cryptographic processing relating to encryption for providing services by the use of devices including integrated circuit (IC) chips, such as IC cards.

### 2. Description of the Related Art

In recent years, so-called electronic money using IC chips has been in widespread use in payment.

For example, users can hold IC cards including IC chips over readers-writers (R/Ws) connected to personal computers (PCs) to pay electronic money charged in the IC chips for articles purchased in shopping sites on the Internet. Users also can bring mobile phones including IC chips close to readers-writers (R/Ws) provided in shops to pay electronic money charged in the IC chips for articles purchased in the shops. In the payment for articles, the PCs, the R/Ws, and the IC cards (IC chips) or the mobile phones including the IC chips, which serve as clients, respond to instructions issued by servers to perform the payment.

In other words, servers perform payment processing including management of the balance of the electronic money charged in the IC chips and subtraction of the prices of articles from the balance to provide the electronic money service in which the electronic money is paid for the articles to users, who are clients.

Not only the electronic money service but also various other services can be provided to users depending on different payment processing.

Encrypted data is transferred between the servers and the clients, which use the IC chips to provide services as described above, in order to ensure the security including prevention of leakage of information into the third persons.

Between the servers and the clients, management of keys (encryption keys) used in the encryption of data and cryptographic processing (including authentication and creation of signature performed by using the encryption and decryption of data) relating to, for example, the encryption and decryption of the data are performed in tamper resistant devices in order to ensure the security. External access to the tamper resistant devices is granted only if the authentication succeeds. Accordingly, the keys, encryption algorithms, etc. is prevented from leaking into external devices.

A technology of such access control in a computer system having a resource, an authentication unit, and an execution engine executing program code with which signature is associated is disclosed in, for example, Japanese Unexamined Patent Application Publication No. 2003-524252. In this technology, an encryption key associated with the resource is used to perform authentication for the signature when the execution engine loads the program code, and the encryption key associated with the resource is used to perform further authentication for the signature when the code in the execution engine requests access to the resource, in order to protect the resource in the computer system.

### SUMMARY OF THE INVENTION

When service providers use the above servers to provide services, it is necessary to, for example, register new keys used for providing the services in tamper resistant apparatuses.

The registration of new keys is performed by operators, who are service providers and who operate external devices to access to the tamper resistant apparatuses. In the past, control of access to the tamper resistant apparatuses by the operators, that is, the access rights of the operators to the tamper resistant apparatuses have been determined by operation.

Hence, it is difficult to prevent any fraudulent behavior which a malicious operator attempts to carry out.

It is desirable to easily control operations, performed by operators, for cryptographic processing including the registration of a key.

According to an embodiment of the present invention, an information processing apparatus includes authentication means for authenticating an operator operating an external device; storage means for storing an access control list that has identification information, identifying the operator, associated with information indicating the cryptographic processing permitted to the operator; confirmation means for referring to the access control list to confirm whether the cryptographic processing requested from the authenticated operator is permitted; and cryptographic processing means for performing the cryptographic processing when the cryptographic processing requested from the operator is permitted.

According to another embodiment of the present invention, an information processing method includes the steps of authenticating an operator operating an external device; referring to an access control list that has identification information, identifying the operator, associated with information indicating the cryptographic processing permitted to the operator to confirm whether the cryptographic processing requested from the authenticated operator is permitted; and performing the cryptographic processing when the cryptographic processing requested from the operator is permitted.

According to yet another embodiment, a program includes the steps of authenticating an operator operating an external device; referring to an access control list that has identification information, identifying the operator, associated with information indicating the cryptographic processing permitted to the operator to confirm whether the cryptographic processing requested from the authenticated operator is permitted; and performing the cryptographic processing when the cryptographic processing requested from the operator is permitted.

According to the present invention, the operator operating the external device is authenticated. The confirmation of whether the cryptographic processing requested from the authenticated operator is permitted is performed by referring to the access control list having the identification information, identifying the operator, associated with the information indicating the cryptographic processing permitted to the operator. The cryptographic processing is performed when the cryptographic processing requested from the operator is permitted.

According to the present invention, it is possible to easily control the operations, performed by operators, for the cryptographic processing.

### BRIEF DESCRIPTION OF THE DRAWINGS

Fig. 1 shows an example of the structure of a server-client system to which the present invention is applied;
Fig. 2 is a block diagram showing an example of the functional structure of a client-side apparatus and a server-side apparatus;
Fig. 3 is a block diagram showing an example of the specific hardware structure of the client-side apparatus and the server-side apparatus;
Fig. 4 is a block diagram showing another example of the specific hardware structure of the client-side apparatus 31 and the server-side apparatus;
Fig. 5 is a block diagram showing an example of the hardware structure of a PC in which a client application is installed;
Fig. 6 is a block diagram showing an example of the hardware structure of a computer in which a server application and a secure server are installed;
Fig. 7 is a block diagram showing an example of the hardware structure of a secure chip;
Fig. 8 shows an example of the directory structure of a memory;
Fig. 9 is a block diagram showing an example of a detailed structure of the secure server;
Figs. 10A and 10B show a flowchart illustrating the operation of the client-side apparatus and the server-side apparatus;
Fig. 11 is a block diagram showing an example of the structure of a secure-chip processing module;
Fig. 12 illustrates access to the secure-chip processing module from an operator;
Fig. 13 illustrates access to the secure-chip processing module from an operator;
Fig. 14 shows an example of description in an access control list;
Fig. 15 is a flowchart showing an operation of a key management application and the secure-chip processing module;
Fig. 16 is a flowchart showing another operation of the key management application and the secure-chip processing module;
Fig. 17 is a flowchart showing yet another operation of the key management application and the secure-chip processing module; and
Fig. 18 is a flowchart showing further another operation of the key management application and the secure-chip processing module.

### DESCRIPTION OF THE PREFERRED EMBODIMENTS

Before describing an embodiment of the present invention, the correspondence between the features of the claims and the specific elements disclosed in embodiments of the present invention is discussed below. This description is intended to assure that embodiments supporting the claimed invention are described in this specification. Thus, even if an element in the following embodiments is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

Furthermore, this description should not be construed as restricting that all the aspects of the invention disclosed in the embodiments are described in the claims. That is, the description does not deny the existence of aspects of the present invention that are described in the embodiments but not claimed in the invention of this application, i.e., the existence of aspects of the present invention that in future may be claimed by a divisional application, or that may be additionally claimed through amendments.

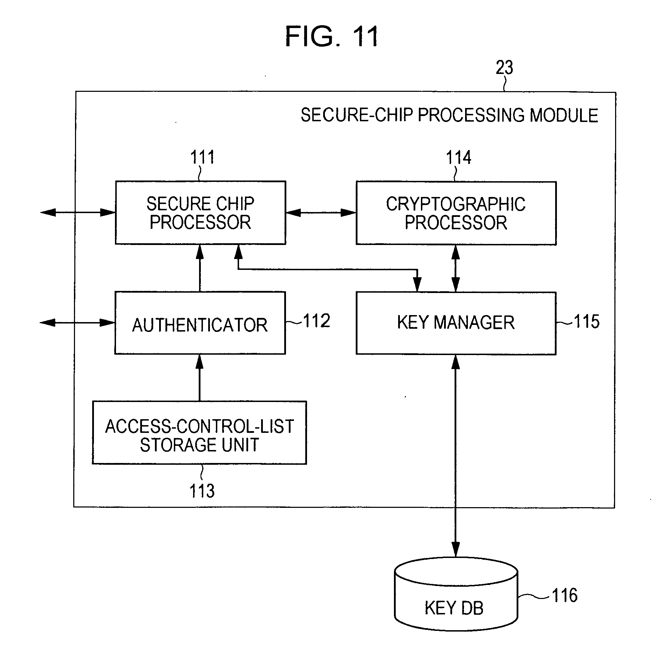

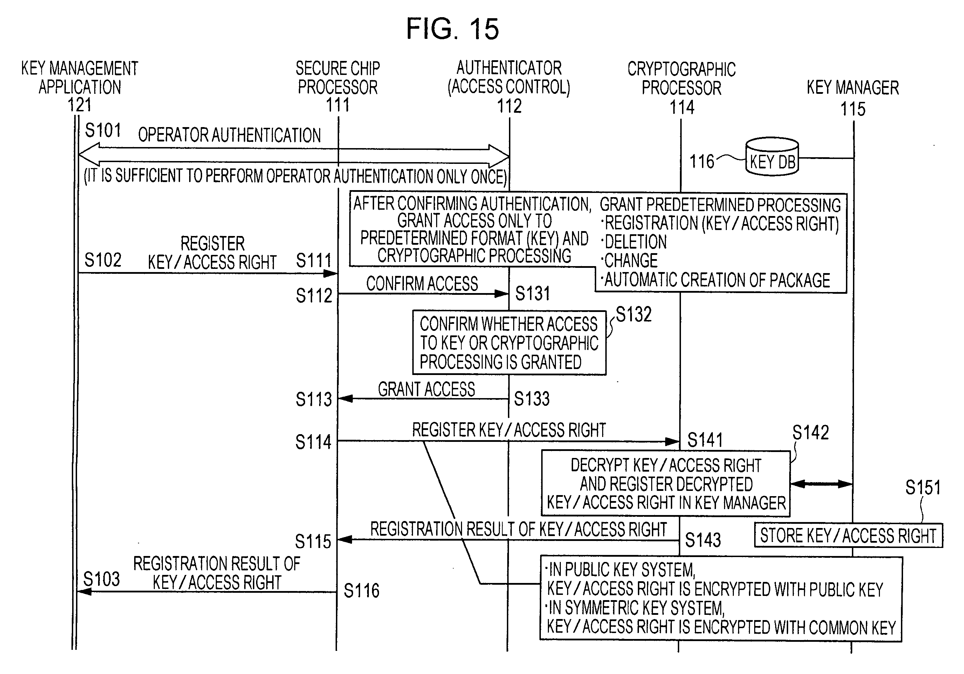

An information processing apparatus (for example, a secure-chip processing module 23 in Fig. 11) performing cryptographic processing for providing a service by using an integrated circuit chip, according to an embodiment of the present invention, includes an authentication unit (for example, an authenticator 112 performing Step S101 in Fig. 15) authenticating an operator operating an external device; a storage unit (for example, an access-control-list storage unit 113 in Fig. 11) storing an access control list that has identification information, identifying the operator, associated with information indicating the cryptographic processing permitted to the operator; a confirmation unit (for example, an authenticator 112 in Fig. 11 performing Step S132 in Fig. 15) referring to the access control list to confirm whether the cryptographic processing requested from the authenticated operator is permitted; and a cryptographic processing unit (for example, a cryptographic processor 114 in Fig. 11) performing the cryptographic processing when the cryptographic processing requested from the operator is permitted.

An information processing method in an information processing apparatus (for example, a secure-chip processing module 23 in Fig. 11) performing cryptographic processing for providing a service by using an integrated circuit chip, according to another embodiment of the present invention, includes the steps of authenticating an operator operating an external device (for example, Step S101 in Fig. 15); referring to an access control list that has identification information, identifying the operator, associated with information indicating the cryptographic processing permitted to the operator to confirm whether the cryptographic processing requested from the authenticated operator is permitted (for example, Step S132 in Fig. 15); and performing the cryptographic processing when the cryptographic processing requested from the operator is permitted (for example, Step S142 in Fig. 15).

A program causing a computer to execute cryptographic processing for providing a service by using an integrated circuit chip, according to yet another embodiment of the present invention, includes the steps of authenticating an operator operating an external device (for example, Step S101 in Fig. 15); referring to an access control list that has identification information, identifying the operator, associated with information indicating the cryptographic processing permitted to the operator to confirm whether the cryptographic processing requested from the authenticated operator is permitted (for example, Step S132 in Fig. 15); and performing the cryptographic processing when the cryptographic processing requested from the operator is permitted (for example, Step S142 in Fig. 15).

Embodiments of the present invention will be described with reference to the attached drawings.

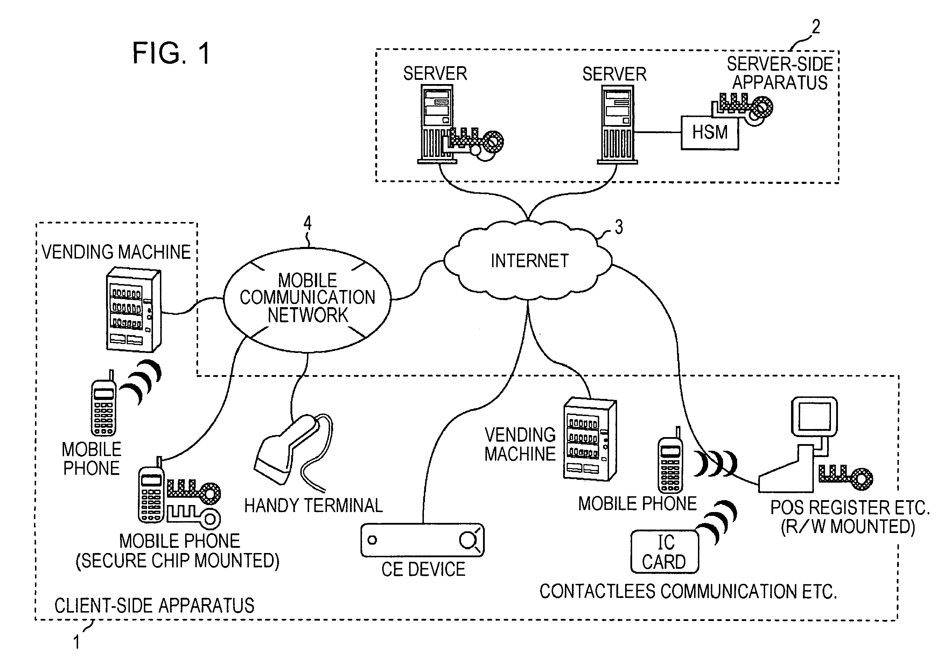

Fig. 1 shows an example of the structure of a server-client system (a system means a logical collection of a plurality of apparatuses and the apparatuses are not necessarily included in the same casing) to which the present invention is applied.

The server-client system in Fig. 1 is structured such that various client-side apparatuses 1, which are so-called clients, are connected to server-side apparatuses 2, which are so-called servers, via a network 3, such as the Internet, and a network 4, such as a mobile communication network, if required.

Each of the client-side apparatuses 1 includes a secure chip. The secure chip is a tamper-resistant secure IC chip and is capable of performing contact or contactless data communication with other apparatuses.

The client-side apparatuses 1 include a mobile terminal, such as a mobile phone or a personal digital assistant (PDA), a PC, a point of sales (POS) register (a register for a POS system), a vending machine, and a handy terminal. The secure chip included in each of the client-side apparatuses 1 is, for example, FeliCa® adopted in Suica® or the like serving as an electronic commuter ticket.

The server-side apparatuses 2 transmit and receive data (including commands) to and from the client-side apparatuses 1 over the network 3 and the network 4, if required, to provide various services. For example, when electronic money is stored in the secure chip in the client-side apparatus 1, the corresponding server-side apparatus 2 provides an electronic money service by controlling subtraction of the price of an article from the electronic money in the client-side apparatus 1 and update of the balance of the electronic money in the client-side apparatus 1 to a subtracted balance.

The client-side apparatus 1 encrypts data to be transmitted to the server-side apparatus 2 and transmits the encrypted data to the server-side apparatus 2. The server-side apparatus 2 encrypts data to be transmitted to the client-side apparatus 1 and transmits the encrypted data to the client-side apparatus 1.

Cryptographic processing relating to encryption (security) of data, including encryption and decryption of data, generation and management of a key used in the encryption and decryption, authentication (the encryption and decryption of data for the authentication), and generation of a random number used in the authentication, in the client-side apparatus 1 is performed in the tamper-resistant secure chip. In contrast, the cryptographic processing in the server-side apparatus 2 is performed in a hardware security module (HSM), which is dedicated tamper resistant hardware, or is performed in software implementing the server-side apparatus 2 without using the tamper resistant HSM.

The cryptographic processing is divided into cryptographic processing requiring higher confidentiality and other cryptographic processing. When the server-side apparatus 2 has the HSM, only the cryptographic processing requiring higher confidentiality is performed in the HSM and the other cryptographic processing is performed in the software implementing the server-side apparatus 2.

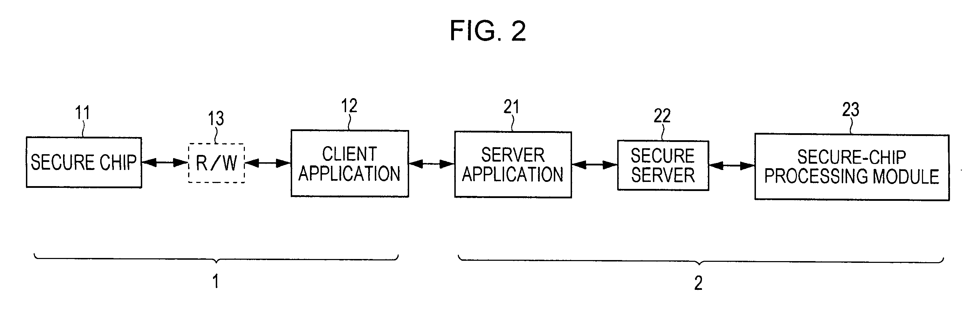

Fig. 2 is a block diagram showing an example of the functional structure of the client-side apparatus 1 and the server-side apparatus 2.

The client-side apparatus 1 includes a secure chip 11, a client application 12, and a reader-writer (R/W) 13, if necessary.

The secure chip 11 is a tamper-resistant secure IC chip and is capable of performing contact or contactless data communication with other apparatuses.

Specifically, the secure chip 11 communicates with the client application 12 directly or via the R/W 13 to perform processing, for example, in accordance with a command transmitted from the client application 12 through the communication. After the processing, the secure chip 11 transmits response data in response to the command to the client application 12 directly or via the R/W 13. The secure chip 11 also performs the cryptographic processing for the transmitted and received data in order to ensure the security.

The client application 12 is, for example, software executed by a computer, which is hardware. The client application 12 functions as a client of a server application 21 described below in the server-side apparatus 2. The client application 12 transmits and receives data (including commands) to and from the server application 21 and supplies the commands to the secure chip 11 directly or via the R/W 13 to write and read the data in and from the secure chip 11, in order to realize various services.

For example, when the client application 12 and the server application 21 are software providing the electronic money service and a storage area for the electronic money service is allocated in the secure chip 11, the data (including commands) required for the electronic money service is communicated between the client application 12 and the server application 21. The data communication includes the subtraction of the price of an article from the electronic money stored in the secure chip 11 and the update of the balance of the electronic money stored in the secure chip 11 to a subtracted balance.

The client application 12 includes a module for controlling the communication with the server application 21, if required.

The R/W 13 performs the contactless or contact communication with the secure chip 11 to transmit the commands supplied from the client application 12 to the secure chip 11. In addition, the R/W 13 receives the data transmitted from the secure chip 11 and supplies the received data to the client application 12.

The server application 21 is, for example, software executed by a computer, which is hardware. The server application 21 functions as a server of the client application 12 in the client-side apparatus 1. The server application 21 transmits and receives data (including commands) to and from the client application 12 to realize various services including the electronic money service described above.

The server application 21 requests a secure server 22 to perform the cryptographic processing for the data that is transmitted and received in order to ensure the security.

The server application 21 includes a module for controlling the communication with the client application 12, if required.

The secure server 22 is, for example, software executed by a computer, which is hardware. The secure server 22 performs the cryptographic processing or requests a secure-chip processing module 23 to perform the cryptographic processing, in response to the request for the cryptographic processing from the server application 21.

Specifically, the secure server 22 requests the secure-chip processing module 23 to perform cryptographic processing requiring higher confidentiality, among the cryptographic processing requested by the server application 21, and performs other cryptographic processing by itself.

The secure-chip processing module 23 performs the cryptographic processing (the cryptographic processing requiring higher confidentiality) in response to the request from the secure server 22.

It is assumed herein that the secure-chip processing module 23 is housed in, for example, dedicated tamper resistant hardware. However, the secure-chip processing module 23 may be one module (software) in the secure server 22.

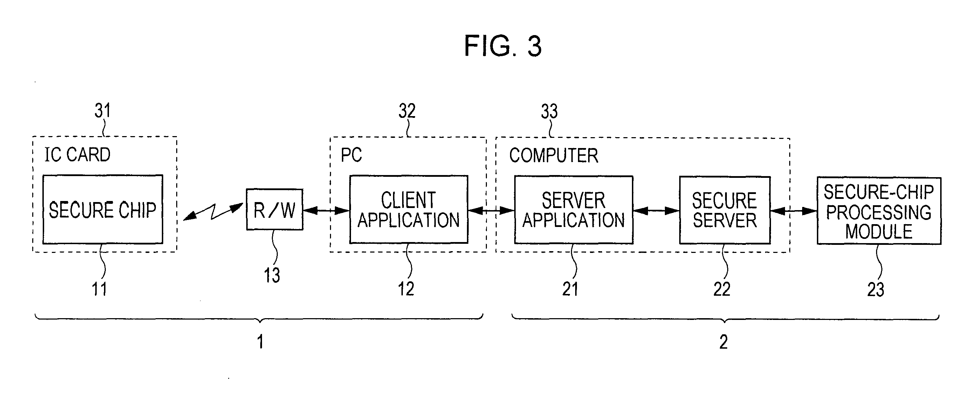

Fig. 3 is a block diagram showing an example of the specific hardware structure of the client-side apparatus 1 and the server-side apparatus 2.

Referring to Fig. 3, the client-side apparatus 1 includes the R/W 13, which is hardware, an integrated circuit (IC) card 31, and a personal computer (PC) 32.

The IC card 31 includes the secure chip 11, which is hardware. For example, the IC card 31 corresponds to a card, such as Edy®, storing the electronic money. The PC 32 is owned by, for example, a user of the IC card 31. The client application 12 is installed in the PC 32. The user operates the PC 32 to, for example, inquire the balance of the electronic money stored in the IC card 31, to charge the electronic money, and to pay the electronic money.

Referring to Fig. 3, the server-side apparatus 2 includes the secure-chip processing module 23, which is hardware, and a computer 33.

The computer 33 is, for example, a server (machine), which is hardware. The server application 21 and the secure server 22 are installed in the computer 33.

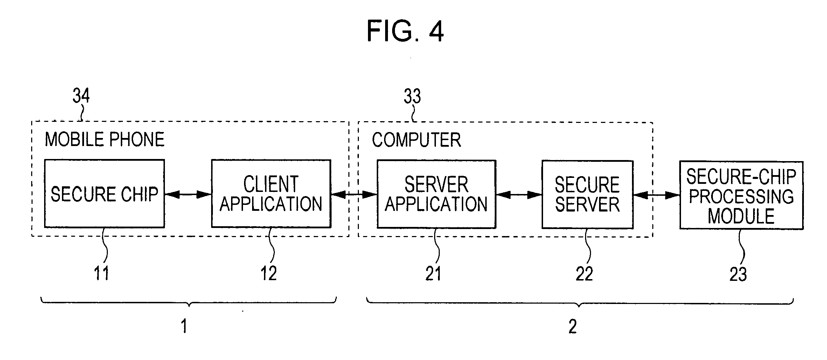

Fig. 4 is a block diagram showing another example of the specific hardware structure of the client-side apparatus 1 and the server-side apparatus 2. The hardware structure of the server-side apparatus 2 in Fig. 4 is similar to that in Fig. 3.

Referring to Fig. 4, the client-side apparatus 1 is a mobile phone 34, which is hardware.

The mobile phone 34 includes the secure chip 11, which is hardware. The client application 12 is installed in the mobile phone 34. The user operates the mobile phone 34 to, for example, inquire the balance of the electronic money stored in the secure chip 11, to charge the electronic money, and to pay the electronic money.

External access to the secure chip 11 included in the mobile phone 34 may be achieved by using a communication function of the mobile phone 34 or may be achieved by bringing the mobile phone 34 (the secure chip 11 included in the mobile phone 34) close to the R/W 13 (not shown in Fig. 4) .

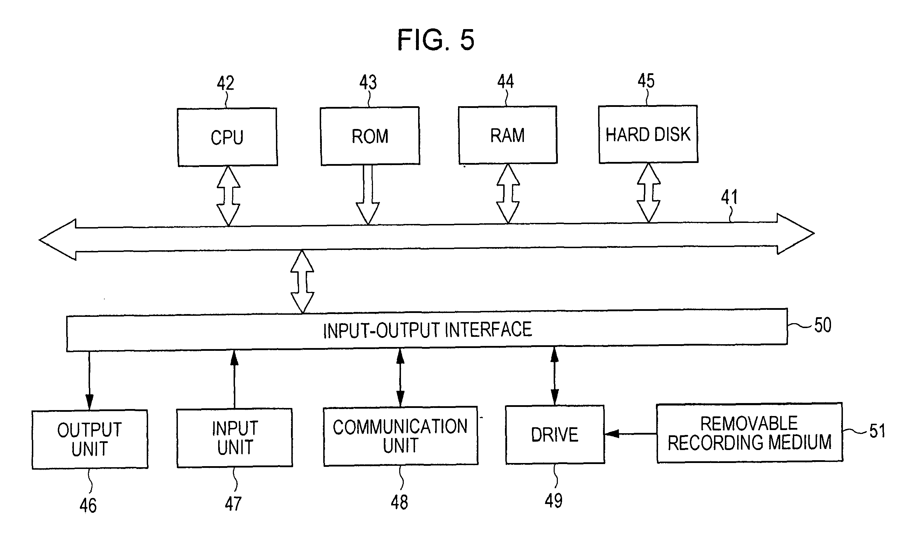

Fig. 5 is a block diagram showing an example of the hardware structure of the PC 32 in Fig. 3, in which the client application 12 is installed.

The PC 32 includes a central processing unit (CPU) 42. An input-output interface 50 is connected to the CPU 42 via a bus 41. The CPU 42 executes programs stored in a read only memory (ROM) 43 in response to instructions that are input by the user with an input unit 47 including a keyboard, a mouse, a microphone, etc. and that are supplied through the input-output interface 50. The CPU 42 loads programs stored in a hard disk 45, programs that are transferred over a satellite or a network, are received by a communication unit 48, and are installed in the hard disk 45, or programs that are read out from a removable recording medium 51 loaded in a drive 49 and are installed in the hard disk 45, in a random access memory (RAM) 44, and executes the loaded programs. The CPU 42 performs a variety of processing in the above manner. The CPU 42 outputs a processing result from an output unit 46 including a liquid crystal display (LCD), speaker, etc., transmits the processing result from the communication unit 48, and/or stores the processing result in the hard disk 45, as needed, through the input-output interface 50.

The input-output interface 50 has, for example, a universal serial bus (USB) terminal and the R/W 13 in Fig. 3 is capable of being connected to the USB terminal. The CPU 42 (the client application 12 executed by the CPU 42) accesses the secure chip 11 (Fig. 3) via the R/W 13 connected to the input-output interface 50.

The programs including the client application 12 may be recorded in advance in the hard disk 45 or the ROM 43, which serves as a recording medium and which is included in the PC 32.

Alternatively, the programs may be temporarily or permanently stored (recorded) in the removable recording medium 51, such as a flexible disk, a compact disc-read only memory (CD-ROM), a magneto optical (MO) disc, a digital versatile disk (DVD), a magnetic disk, or a semiconductor memory. The removable recording medium 51 may be provided as package software.

The programs may be transferred from a download site to the PC 32 via an artificial satellite for digital satellite broadcasting by radio waves or may be wire-transferred to the PC 32 via the network 3, such as a local are network (LAN) or the Internet, in addition to being installed in the PC 32 from the removable recording medium 51 described above. The PC 32 receives the transferred programs in the communication unit 48 and installs the received programs in the hard disk 45.

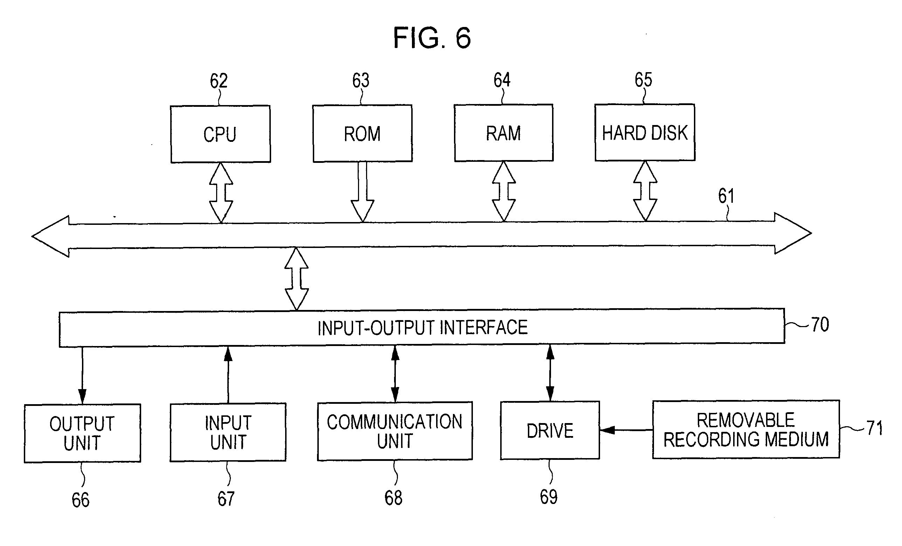

Fig. 6 is a block diagram showing an example of the hardware structure of the computer 33 in Fig. 3, in which the server application 21 and the secure server 22 are installed.

Referring to Fig. 6, components from a bus 61 to a removable recording medium 71 in the computer 33 are structured in the same manner as the components from the bus 41 to the removable recording medium 51 in Fig. 5. A description of such components in Fig. 6 is omitted herein.

In the examples in Figs. 3 and 4, the secure-chip processing module 23 is connected to the computer 33 via the communication unit 68 or the input-output interface 70.

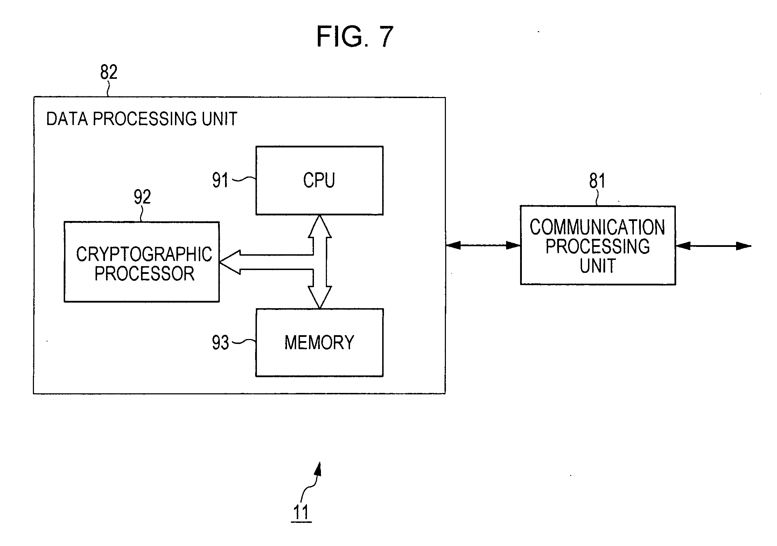

Fig. 7 is a block diagram showing an example of the hardware structure of the secure chip 11 in Fig. 2.

The secure chip 11 mainly includes a communication processing unit 81 and a data processing unit 82. The communication processing unit 81 performs processing required for contact or contactless communication with devices external to the secure chip 11 to supply data (including commands) externally transmitted to the data processing unit 82 and to transmit data supplied from the data processing unit 82 to the external devices.

The processing required for the external communication, performed by the secure chip 11, includes encoding and decoding of data etc. and modulation and demodulation thereof. When the secure chip 11 does not have a power supply, the communication processing unit 81 also performs generation of power from external signals.

The data processing unit 82 includes, for example, a CPU 91, a cryptographic processor 92, and a memory 93. The data processing unit 82 performs a variety of processing in accordance with commands supplied from the communication processing unit 81.

Specifically, the CPU 91 controls the cryptographic processor 92 and manages the memory 93. The CPU 91 writes and reads data in and from the memory 93 in accordance with the commands supplied from the communication processing unit 81 and performs data processing for data stored in the memory 93. The CPU 91 executes programs stored in the memory 93 to perform a variety of processing.

The cryptographic processor 92 performs the cryptographic processing under the control of the CPU 91. The cryptographic processing includes two-way authentication (including, for example, generation of a random number used in the two-way authentication) in a challenge-and-response method and generation of a key (information concerning a cryptographic key) used in encryption and decryption, in addition to the encryption and decryption of data (including commands).

The memory 93, which is a non-volatile memory, stores data and programs. Physically, the memory 93 may be one memory or may include a plurality of memories. When the memory 93 includes a plurality of memories, nonvolatile memories may be used as part of the memories. For example, data required for being temporarily stored for the operation of the CPU 91 is stored in the nonvolatile memory.

The CPU 91 layers the storage area of the memory 93 to manage the layered storage area.

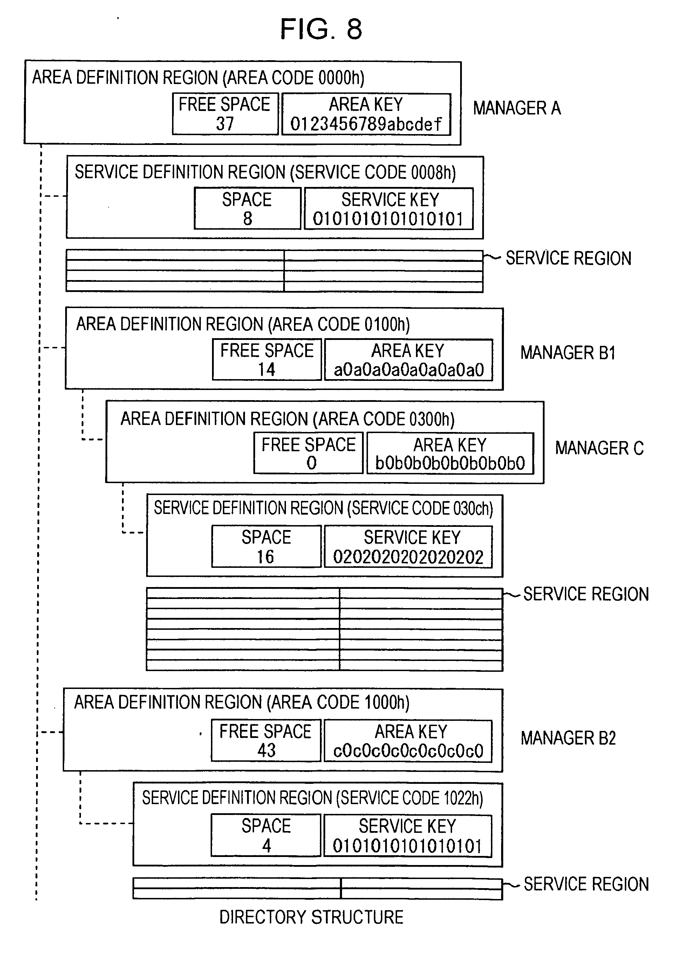

Fig. 8 shows an example of the directory structure of the memory 93.

Part of the storage area of the memory 93 is used as a data storage area storing data used for providing various services. The data storage area has a layered structure in which area definition regions corresponding to directories are layered. Each area definition region is capable of including area definition regions, which correspond to lower-layer directories, and service definition regions, which correspond to files and manage service regions described below.

The area definition regions are parts of the data storage area of the memory 93 and are allocated to managers managing service providers who provide services (the managers may be service providers). An area code as an identification code that is used as a name for identifying the area definition region, a free space indicating the number of available free blocks, and an area key as a key required for getting access to the area definition region (including the area definition region(s) and the service definition region(s) under the area definition region) are allocated in each of the area definition region.

The CPU 91 manages the data storage area of the memory 93 in units of fixed blocks in the storage capacity. The free space of the data storage area, managed in the area definition regions, is managed based on the number of blocks.

In the embodiment shown in Fig. 8, the area definition region allocated to a manger A corresponds to the top layer and the area definition regions of managers B1 and B2 are created under the area definition region allocated to the manager A. The area definition region of a manager C is created under the area definition region of the manger B1.

The service definition regions are parts of the data storage area of the memory 93, used for managing the service regions described below and are allocated to services provided by the service providers. A service code as an identification code that is used as a name for identifying the service definition region, the number of blocks indicating the capacity of a service region in which data required for providing the service is stored, and a service key as a key required for getting access to the service definition region (including the service region managed by the service definition region) are allocated in each of the service definition region.

The service regions are parts of the data storage area and each include zero or more blocks in which data required for providing the service is stored. The number of blocks constituting the service region is described as the capacity of the service definition region managing the service region.

The service provider creates the service definition region under the area definition region managed by one manager and uses the service region managed in the service definition region to provide various services. For example, in the provision of the electronic money service, the balance of the electronic money, the information concerning an article for which the electronic money is paid (for example, the name and/or price of the article), and the date when the article is purchased are stored in the service region.

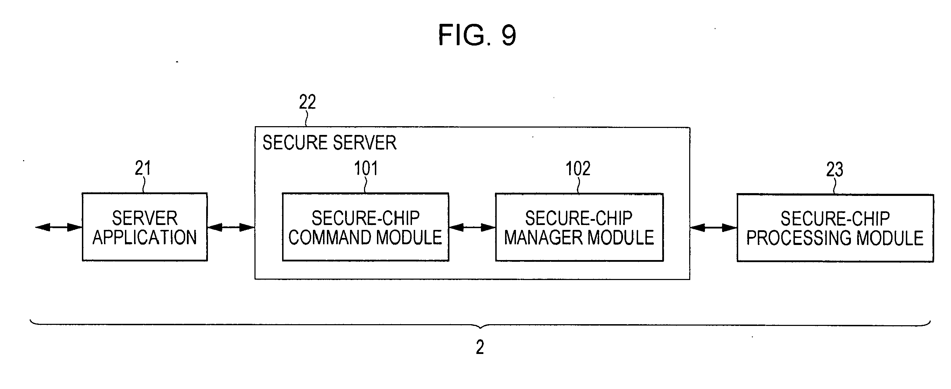

Fig. 9 is a block diagram showing an example of a detailed structure of the secure server 22 in Fig. 2.

The secure server 22 includes a secure-chip command module 101 and a secure-chip manager module 102.

The secure-chip command module 101 creates a command for the secure chip 11, for example, in response to a request to create the command from the server application 21 and supplies the created command to the server application 21.

In other words, when the server application 21 instructs the secure chip 11 in the client-side apparatus 1 to perform some kind of processing, the server application 21 requests the secure-chip command module 101 to create the command corresponding to the processing. The secure-chip command module 101 creates the command for the secure chip 11 in response to the request from the server application 21 and supplies the created command to the server application 21.

Accordingly, even when the secure chips (the secure chips differ in the operation codes functioning as the commands, in the parameters of the commands, and in the kinds of the commands) in various command systems exist, it is not necessary to create the server application 21 for every secure chip in the various command systems because the server application 21 needs not to know the command for the secure chip 11 (the server application 21 may know the command) .

In other words, it is sufficient for the server application 21 to use the command system which the secure-chip command module 101 is capable of translating.

The secure-chip command module 101 creates the command for the secure chip 11 in response to the request from the server application 21 and supplies the created command to the server application 21. However, before supplying the created command to the server application 21, the secure-chip command module 101 supplies the command to the secure-chip manager module 102 to request encryption of the command. The secure-chip command module 101 supplies cryptographic information (for example, the encrypted command) supplied from the secure-chip manager module 102 in response to the request to the server application 21.

The secure-chip manager module 102 performs the cryptographic processing including the encryption of the commands in response to the request from the secure-chip command module 101 or requests the secure-chip processing module 23 to perform the cryptographic processing. The secure-chip manager module 102, then, supplies the cryptographic information resulting from the cryptographic processing in the secure-chip manager module 102 or the secure-chip processing module 23 to the secure-chip command module 101.

The secure-chip manager module 102 performs the cryptographic processing for the secure chip 11 or requests the secure-chip processing module 23 to perform the cryptographic processing for the secure chip 11.

For example, the secure chip 11 is capable of processing only the commands (data) for which the encryption for the secure chip 11 has been performed. Specifically, the encryption of data (including commands) is performed by various algorithms and the encryption by a certain algorithm is adopted in the secure chip 11. On the assumption that information indicating the algorithm adopted in the secure chip 11 (including information indicating the keys used in the encryption by the algorithm) is referred to as an encryption type, the secure-chip manager module 102 performs the encryption having the encryption type corresponding to the secure chip 11 or requests the secure-chip processing module 23 to perform the encryption having the encryption type corresponding to the secure chip 11.

The secure-chip manager module 102 may be structured so as to perform the encryption having an encryption type different from that of the secure chip 11. The same applies to the secure-chip processing module 23.

Although the encryption is performed for, for example, the authentication, the encryption of a communication path described below, or creation of a package described below, it is possible to set the encryption type for every encryption for the authentication, the encryption of the communication path, or the creation of the package. The encryption type may contain information relating the authentication, the encryption of the communication path, or the creation of the package, for example, information indicating whether two-way authentication or one-way authentication is performed.

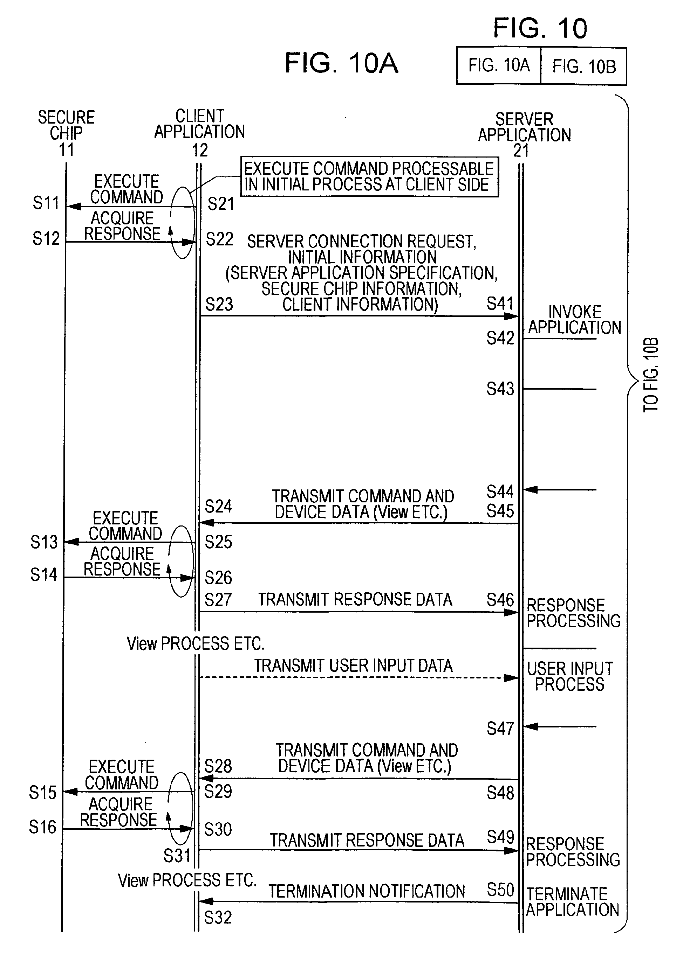

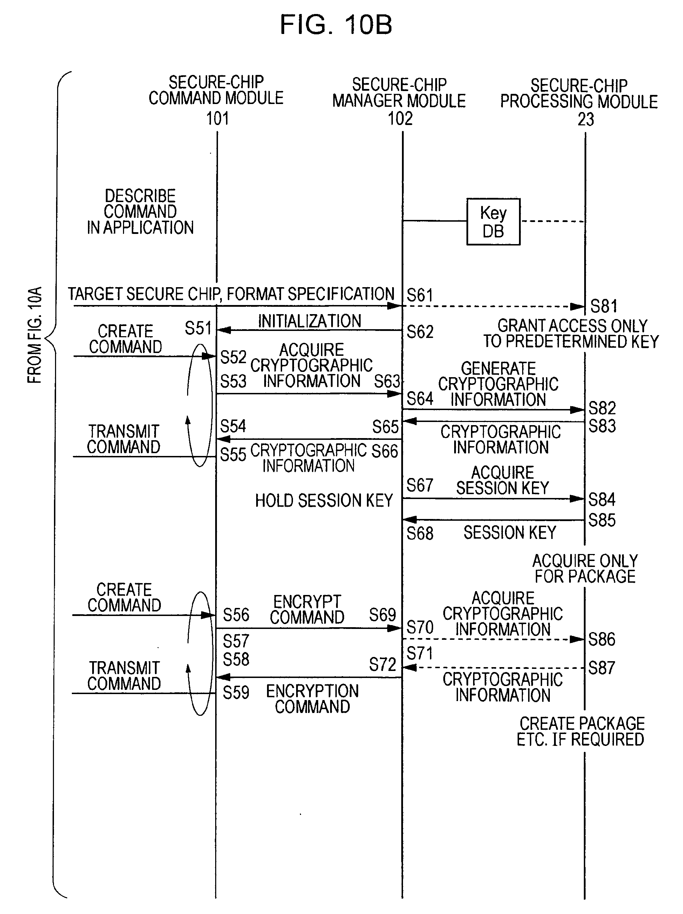

Figs. 10A and 10B show a flowchart illustrating the operation of the client-side apparatus 1 and the server-side apparatus 2.

After the client application 12 is invoked, in Step S21, the client application 12 transmits a command to request secure chip information concerning the secure chip 11 to the secure chip 11.

In Step S11, the secure chip 11 receives the command transmitted from the client application 12. In Step S12, the secure chip 11 transmits the secure chip information as a response to the command to the client application 12.

In Step S22, the client application 12 receives the secure chip information from the secure chip 11. In Step S23, the client application 12 transmits a server connection request, along with initial information including the secure chip information, to the server-side apparatus 2.

The initial information includes client information concerning the client application 12 and server application specification specifying the server application 21 in the server-side apparatus 2 to which the client application 12 is to be connected, in addition to the secure chip information.

The secure chip information includes a secure chip type indicating the type of the secure chip 11, a secure chip OS type indicating the operating system (OS) adopted in the secure chip 11, and a secure-chip file structure which is information (a file format, a list of the area codes, and a list of the service codes (memory format)) concerning the data management in the secure chip 11. With the secure type, it is possible to identify an encryption and signature algorithm (data encryption standard (DES), triple-DES (T-DES), Rivest Shamir Adleman (RSA), elliptic curve-digital signature algorithm (EC-DSA), etc.) used in the authentication, the encryption of the communication path, and the cryptographic processing of an execution right; a challenge-and-response method in the authentication; and a format and a padding rule of a target of the encryption and signature.

The client information includes a client type indicating the hardware of the client-side apparatus 1 (for example, information indicating that the client-side apparatus 1 is a mobile phone, a PC, or a POS register), a client OS type indicating the OS adopted in the client-side apparatus 1, a client application ID identifying the client application 12, and an application version indicating the version number of the client application 12.

The client application 12 may acquire the secure chip information from the secure chip 11 in response to the request for the initial information including the secure chip information from the server application 21, which request is submitted, for example, after the connection to the server application 21, and may include the acquired secure chip information in the initial information to transmit the initial information to the server application 21.

However, acquiring the secure chip information from the secure chip 11 and, then, transmitting the initial information including the secure chip information to the server application 21 along with the server connection request by the client application 12, shown in Figs. 10A and 10B, require less communication between the client application 12 and the server application 21, thus reducing the processing time.

In addition, since the server-side apparatus 2 receives the client information simultaneously with the start of the access from the client-side apparatus 1, the server-side apparatus 2 is capable of transmitting and receiving commands and messages (for example, a graphical user interface (GUI) such as a screen) appropriate for the client application 12 based on the client information. The commands and messages appropriate for the client application 12 mean commands or messages whose content is appropriate for the client application 12 or commands and messages the length or the number of which is appropriate for the client application 12.

In Step S41, the server application 21 receives the server connection request and the initial information from the client application 12, invokes an application (software) used for providing a service required by the client-side apparatus 1, and proceeds to Step S42.

In Step S42, the server application 21 supplies the secure chip information and the client information, included in the initial information received in Step S41, to the secure-chip manager module 102 in the secure server 22. In Step S61, the secure-chip manager module 102 receives the secure chip information and the client information supplied from the server application 21 and supplies the secure chip information to the secure-chip processing module 23.

In Step S81, the secure-chip processing module 23 sets a processing range of access from the secure chip 11 based on the secure chip information supplied from the secure-chip manager module 102.

Specifically, the secure-chip processing module 23 is capable of performing the cryptographic processing for various secure chips and services and includes keys required for the cryptographic processing for the various secure chips and services. When the secure chip 11 receives, for example, provision of only the electronic money service, the secure-chip processing module 23 performs (permits) only the cryptographic processing required for providing the electronic money service for the secure chip 11. When a key used in the encryption and decryption of data in the electronic money service is set in advance, the secure-chip processing module 23 permits the secure chip 11 to use only the key used in the encryption and decryption of the data in the electronic money service and does not permit the secure chip 11 to use keys used in the encryption and decryption of data in other services.

In contrast, the secure-chip manager module 102 is ready to perform the processing appropriate for the secure chip 11 and the client application 12 based on the secure chip information and the client information received from the server application 21 in Step S61.

Specifically, since the secure-chip manager module 102 is capable of performing the processing appropriate for various secure chips and client applications, the secure-chip manager module 102 is ready to perform the processing appropriate for the secure chip 11 and the client application 12 based on the secure chip information and the client information received from the server application 21 in Step S61.

For example, the secure-chip manager module 102 allocates a resource required for performing the processing for the secure chip 11 and recognizes a command type and a cryptographic processing type of the secure chip 11 from the secure chip information and so on. The command type indicates a command system corresponding to the type (for example, the secure chip included in an IC card or the secure chip included in a mobile phone) of the secure chip 11 in the client-side apparatus 1. Then, the secure-chip manager module 102 is ready to perform the encryption etc. corresponding to the cryptographic processing type of the secure chip 11 for the command etc. to be transmitted to the client-side apparatus 1.

In Step S62, the secure-chip manager module 102 transmits an initialization instruction to the secure-chip command module 101, along with the command type of the secure chip 11. In Step S51, the secure-chip command module 101 receives the initialization instruction and the command type and initializes itself so as to perform the processing appropriate for the secure chip 11. In other words, the secure-chip command module 101 is ready to create the command for the secure chip 11 (the command in the command system indicated by the command type of the secure chip 11) in response to the request to create a command from the server application 21.

The server application 21 performs the authentication for preventing phishing with, for example, the secure-chip processing module 23. If the authentication succeeds, the authentication for preventing the phishing is also performed between the secure chip 11 and the secure-chip processing module 23.

The authentication between the secure chip 11 and the secure-chip processing module 23 is performed based on the cryptographic processing type of the secure chip 11. When the cryptographic processing type of the secure chip 11 indicates, for example, the two-way authentication by the challenge-and-response method, the two-way authentication by the challenge-and-response method is performed between the secure chip 11 and the secure-chip processing module 23. In the challenge-and-response method, the secure-chip processing module 23 (the secure chip 11) generates a random number, encrypts the random number, and transmits and receives the encrypted random number to and from the secure chip 11 to perform the two-way authentication. If the two-way authentication succeeds, the random number generated by the secure-chip processing module 23 in the two-way authentication is used as a session key for identifying the session between the secure chip 11 and the secure-chip processing module 23.

Then, in the server-side apparatus 2, the command to be transmitted to the secure chip 11 (including parameters and other data accompanying the command) is encrypted by using the generated session key as the key and the encrypted command is transmitted to the client-side apparatus 1. Also in the client-side apparatus 1, the data and so on to be transmitted from the secure chip 11 to the server-side apparatus 2 are encrypted in the secure chip 11 by using the session key as the key and the encrypted data is transmitted to the server-side apparatus 2.

The encryption of the data and so on by using the session key as the key and the transmission of the encrypted data in the above manner both in the client-side apparatus 1 and the server-side apparatus 2 cause the communication path between the client-side apparatus 1 and the server-side apparatus 2 to be encrypted, that is, cause a virtual private network (VPN) to be realized. The encryption using the session key as the key is performed in accordance with the algorithm indicated by the cryptographic processing type of the secure chip 11.

In Step S43, the server application 21 transmits a request to create a command to be transmitted to the secure chip 11 to the secure-chip command module 101. In Step S52, the secure-chip command module 101 receives the request to create a command from the server application 21.

In Step S53, the secure-chip command module 101 creates a command for the secure chip 11 in response to the request to create a command from the server application 21 and supplies a request to encrypt the created command to generate cryptographic information to the secure-chip manager module 102. In Step S63, the secure-chip manager module 102 receives the request to encrypt the command to generate cryptographic information from the secure-chip command module 101. In Step S64, the secure-chip manager module 102 transmits the request to the secure-chip processing module 23.

Since the session key used in the encryption of the communication path is held in the secure-chip processing module 23, the secure-chip manager module 102 requests the secure-chip processing module 23 to encrypt the command with the held session key.

In Step S82, the secure-chip processing module 23 receives the request from the secure-chip manager module 102 and encrypts the command in response to the request. In Step S83, the secure-chip processing module 23 transmits the cryptographic information resulting from the encryption to the secure-chip manager module 102. In Step S65, the secure-chip manager module 102 receives the cryptographic information from the secure-chip processing module 23.

In Step S66, the secure-chip manager module 102 transmits the cryptographic information received from the secure-chip processing module 23 to the secure-chip command module 101.

In Step S54, the secure-chip command module 101 receives the cryptographic information supplied from the secure-chip manager module 102. In Step S55, the secure-chip command module 101 transmits the cryptographic information (the encrypted command) to the server application 21.

In Step S44, the server application 21 receives the cryptographic information supplied from the secure-chip command module 101. In Step S45, the server application 21 transmits the cryptographic information (the encrypted command) to the client application 12, along with device data, which is a message to the client-side apparatus 1.

In Step S24, the client application 12 receives the cryptographic information and the device data transmitted from the server application 21. In Step S25, the client application 12 transmits the cryptographic information to the secure chip 11.

In Step S13, the secure chip 11 receives the cryptographic information transmitted from the client application 12 and decrypts the cryptographic information into the command with the session key. The secure chip 11 performs the processing corresponding to the decrypted command. In Step S14, the secure chip 11 transmits response data in response to the command to the client application 12. The response data is encrypted with the session key in the secure chip 11, if required.

In Step S26, the client application 12 receives the response data transmitted from the secure chip 11. In Step S27, the client application 12 transmits the response data to the server application 21.

The server application 21 receives the response data transmitted from the client application 12 and performs the processing corresponding to the response data. Alternatively, the server application 21 transmits the response data to the secure-chip command module 101 and the secure-chip manager module 102.

When the user operates the client-side apparatus 1 to input any data (user input data), the client application 12 transmits the data to the server application 21.

In Step S67, the secure-chip manager module 102 transmits a request for the session key to the secure-chip processing module 23.

In Step S84, the secure-chip processing module 23 receives the request for the session key from the secure-chip manager module 102. In Step S85, the secure-chip processing module 23 transmits the session key resulting from the authentication with the secure chip 11 to the secure-chip manager module 102 in response to the request.

In Step S68, the secure-chip manager module 102 receives the session key transmitted from the secure-chip processing module 23 and holds the session key.

Then, the encryption with session key is performed in the secure-chip manager module 102 and only the encryption requiring higher confidentiality is performed in the secure-chip processing module 23.

Performing the encryption with session key in the secure-chip manager module 102 and performing only the encryption requiring higher confidentiality (including the two-way authentication performed by using the encryption and the creation of the package) in the secure-chip processing module 23 can reduce the load on the secure-chip processing module 23, compared with a case in which all the encryption (the cryptographic processing) is performed in the secure-chip processing module 23. As a result, it is possible to reduce the processing time in the secure-chip processing module 23.

A plurality of tamper-resistant secure-chip processing modules 23 may be provided and the cryptographic processing for different secure chips may be distributed over the plurality of secure-chip processing modules 23 in order to reduce the load on each of the secure-chip processing modules 23.

In Step S46, the server application 21 transmits a request to create a command to be transmitted to the secure chip 11 to the secure-chip command module 101. In Step S56, the secure-chip command module 101 receives the request to create a command from the server application 21.

In Step S57, the secure-chip command module 101 creates a command for the secure chip 11 in response to the request to create a command from the server application 21 and supplies a request to encrypt the created command to generate cryptographic information to the secure-chip manager module 102. In Step S69, the secure-chip manager module 102 receives the request to encrypt the command to generate cryptographic information from the secure-chip command module 101.

If the request from the secure-chip command module 101 is a request to encrypt a command other than a special command, the secure-chip manager module 102 encrypts the command with the held session key. In Step S72, the secure-chip manager module 102 transmits the cryptographic information resulting from the encryption to the secure-chip command module 101.

In contrast, if the request from the secure-chip command module 101 is a request to encrypt a special command, then in Step S70, the secure-chip manager module 102 transmits a request for (data on) a warrant indicating the execution right of the special command to the secure-chip processing module 23.

The special command is, for example, a command requesting the secure chip 11 to register the area definition region or the service definition region (Fig. 8) or a command requesting the secure chip 11 to delete the area definition region or the service definition region.

In Step S86, the secure-chip processing module 23 receives the request from the secure-chip manager module 102. The secure-chip processing module 23 creates (data on) the warrant indicating the execution right of the special command in response to the request and encrypts the created warrant. In addition, the secure-chip processing module 23 adds (data on) a certificate verifying the validity of the warrant to the encryption result of the warrant. In Step S87, the secure-chip processing module 23 transmits a package of the certificate and (the encryption result) of the warrant to the secure-chip manager module 102.

The secure-chip processing module 23 stores the packages that have been created. When the request from the secure-chip manager module 102 requests a created warrant and the package including the warrant is stored in the secure-chip processing module 23, the secure-chip processing module 23 transmits the stored package to the secure-chip manager module 102.

In Step S71, the secure-chip manager module 102 receives the package transmitted from the secure-chip processing module 23. In Step S72, the secure-chip manager module 102 encrypts the special command with the session key and transmits the cryptographic information including a set of the encryption result and the package to the secure-chip command module 101.

In Step S58, the secure-chip command module 101 receives the cryptographic information supplied from the secure-chip manager module 102. In Step S59, the secure-chip command module 101 transmits the cryptographic information to the server application 21.

In Step S47, the server application 21 receives the cryptographic information transmitted from the secure-chip command module 101. In Step S48, the server application 21 transmits the cryptographic information to the client application 12, along with the device data, which is a message to the client-side apparatus 1.

In Step S28, the client application 12 receives the cryptographic information and the device data transmitted from the server application 21. In Step S29, the client application 12 transmits the cryptographic information to the secure chip 11.

In Step S15, the secure chip 11 receives the cryptographic information transmitted from the client application 12 and decrypts the cryptographic information into the command with the session key. In addition, the secure chip 11 performs the processing corresponding to the command after confirming the execution right of the command, if needed. In Step S16, the secure chip 11 transmits response data in response to the command to the client application 12.

In Step S30, the client application 12 receives the response data transmitted from the secure chip 11. In Step S31, the client application 12 transmits the response data to the server application 21.

In Step S49, the server application 21 receives the response data transmitted from the client application 12 and performs the processing corresponding to the response data.

If the server application 21 terminates the communication with the client-side apparatus 1, then in Step S50, the server application 21 transmits a termination notification to the client application 12. In Step S32, the client application 12 receives the termination notification transmitted from the server application 21.

As described above, it is possible to structure the secure server 22 (the secure-chip command module 101 and the secure-chip manager module 102) and the secure-chip processing module 23 so as to correspond to a plurality of secure chips 11 differing in specifications, for example, the cryptographic processing type. The processing corresponding to the secure chip 11 is performed in the secure server 22 and the secure-chip processing module 23 in accordance with the secure chip information concerning the secure chip 11, transmitted from the client-side apparatus 1, to eliminate the need for changing the server application 21 for every secure chip 11 differing in the specifications, for example, the cryptographic processing type. In other words, it is possible to use the same server application 21 for the secure chips 11 having different specifications.

Fig. 11 is a block diagram showing an example of the structure of the secure-chip processing module 23.

The secure-chip processing module 23 includes a secure chip processor 111, an authenticator 112, an access-control-list storage unit 113, a cryptographic processor 114, and a key manager 115.

The secure chip processor 111 controls the entire secure-chip processing module 23. The secure-chip processing module 23 manages, for example, input and output of data in and from external devices and responses in response to requests from the external devices.

For example, the secure chip processor 111 causes the authenticator 112 to confirm whether the cryptographic processing requested from the server application 21, the secure server 22, or another external device is granted. Only if the cryptographic processing is granted, the secure chip processor 111 causes the cryptographic processor 114 to perform the requested cryptographic processing. When a result of the cryptographic processing is supplied from the cryptographic processor 114, the secure chip processor 111 transmits the result of the cryptographic processing to the external device.

The authenticator 112 refers to an access control list stored in the access-control-list storage unit 113 described below to confirm whether the access (cryptographic processing) requested from the external device to the secure chip processor 111 is granted, in response to the request from the secure chip processor 111. The confirmation result in the authenticator 112 is supplied to the secure chip processor 111. The authenticator 112 also performs authentication with any accessing external device. The authenticator 112 further generates a random number to be used as the session key described above.

The authenticator 112 may be integrated with the secure chip processor 111 to form a functional unit. In this case, the functional unit including the secure chip processor 111 and the authenticator 112 performs the processing in the secure chip processor 111 and the processing in the authenticator 112 described above.

The access-control-list storage unit 113 stores the access control list.

The content of the access (the cryptographic processing) granted to an application, which is an external device requesting access to the secure-chip processing module 23, or an operator operating the external device is described in the access control list in association with an identification (ID) identifying the application or the operator. The content of the access control list will be described in detail below.

The cryptographic processor 114 performs the cryptographic processing when the secure chip processor 111 requests the cryptographic processor 114 to perform the cryptographic processing (for example, registration or deletion of a key or encryption and decryption of data). The cryptographic processor 114 indicates a result of the cryptographic processing to the secure chip processor 111.

The cryptographic processor 114 acquires a key from the key manager 115 when the key is necessary for the cryptographic processing requested from the secure chip processor 111, and uses the key to perform the cryptographic processing. When the key acquired from the key manager 115 is encrypted, the cryptographic processor 114 decrypts the encrypted key and uses the decrypted key to perform the cryptographic processing requested from the secure chip processor 111.

The key manager 115 manages keys. Specifically, the key manager 115 encrypts the keys and stores the encrypted keys in a key DB 116. The key manager 115 supplies the encrypted key stored in the key DB 116 without any processing, for example, in response to a request from the cryptographic processor 114.

The key DB 116 stores the encrypted keys and so on, supplied from the key manager 115.

Although the key DB 116 is provided outside the secure-chip processing module 23 as an external storage device in Fig. 11, the key DB 116 may be provided in the secure-chip processing module 23.

When the key DB 116 is provided as an external storage device, the acquisition of a required key from the key DB 116 is performed with a predetermined application (software) capable of accessing the key DB 116, without using the key manager 115, and the key acquired with the predetermined application is supplied to the secure-chip processing module 23.

When the key DB 116 is provided in the secure-chip processing module 23, the key DB 116 is capable of holding a key that is not encrypted. In this case, the key manager 115 supplies the unencrypted key (a so-called a plain text), held in the key DB 116, to the cryptographic processor 114 without any processing.

It is necessary for a service provider who provides a service by using the server-side apparatus 2 to register the key used in the encryption of data (including commands) transferred between the client-side apparatus 1 and the server-side apparatus 2 and the key serving as a service key (area key) used for accessing the area definition region (service definition region) in the secure chip 11, in the key DB 116 through the secure-chip processing module 23, in order to provide the service.

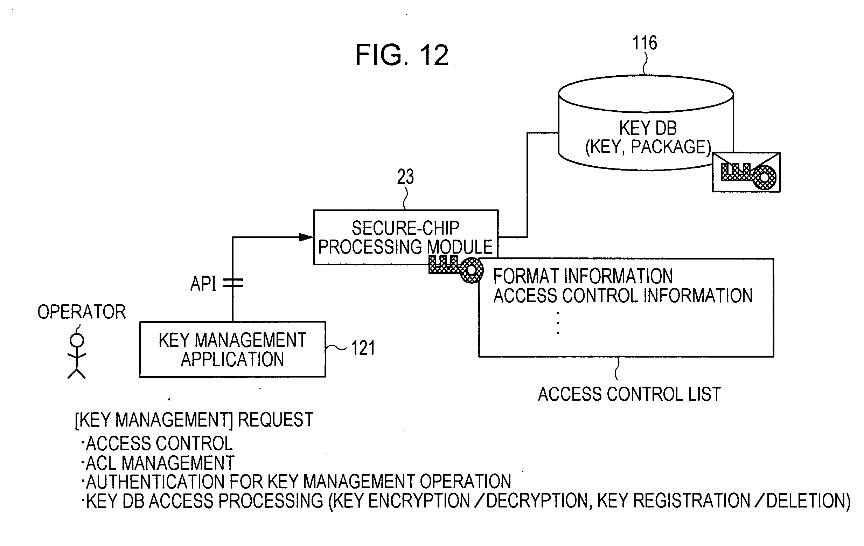

The registration of the keys in the key DB 116 is performed by the operator, who is a service provider and who operates a key management application 121 used for managing the keys, as shown in Fig. 12.

The key management application 121 is software and is installed in, for example, a computer structured in the same manner as the computer 33 in Fig. 6. Access from the key management application 121 to the secure-chip processing module 23 is performed through an application programming interface (API), if needed.

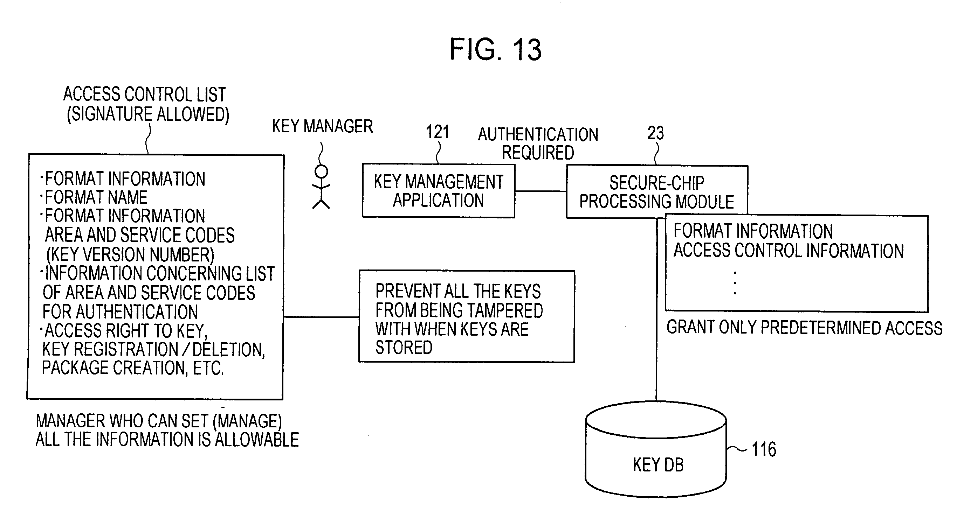

The operators, who are service providers, include operators as assistants who perform operations for registering the keys in accordance with instructions issued from the service providers and operators as key managers who manage the assistants and the keys. The operators as the key managers are also capable of accessing the secure-chip processing module 23 via the key management application 121, as shown in Fig. 13.

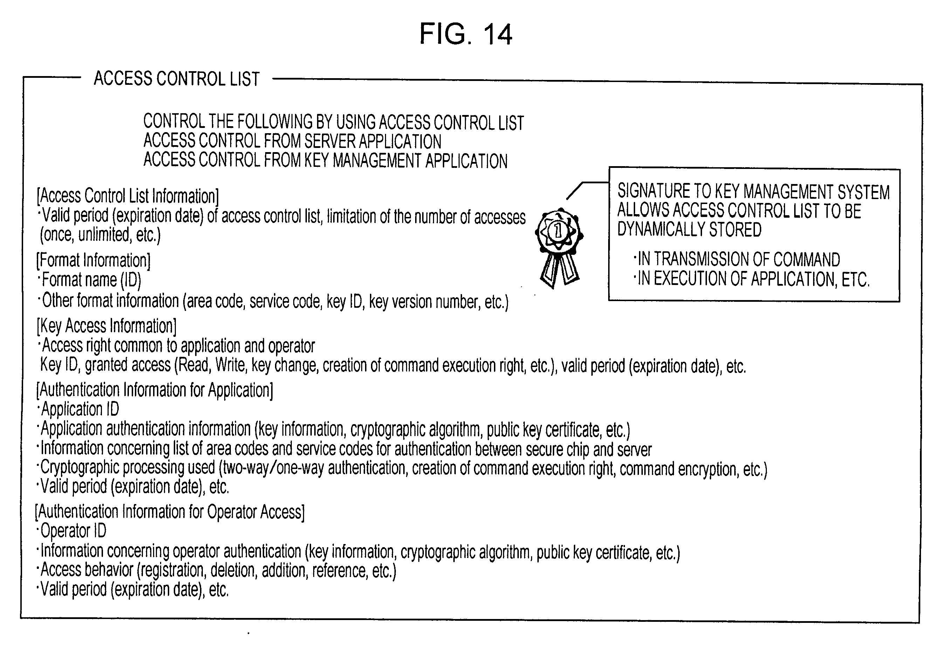

Fig. 14 shows an example of description in the access control list stored in the access-control-list storage unit 113 in Fig. 11.

"Access Control Information", "Format Information", "Key Access Information", "Authentication Information for Application", and "Authentication Information for Operator Access" are described in the access control list.

The "Access Control Information" shows basic information concerning the access control list. A valid period (expiration date) and limitation of the number of accesses (once, unlimited, etc.) are described in the "Access Control Information".

The "Format Information" has a format name (the ID of a format) associated with other format information. The format name is information indicating specifications of, for example, the secure chip. The other format information includes the area codes of the area definition regions and the service codes of the service definition regions, the area definition regions and the service definition regions being formed in the secure chip having the specifications identified by the format name associated with the other format information, a key ID identifying a key used for accessing the area definition regions and the service definition regions, and a key version indicating the version numbers of the key.

The "Key Access Information" indicates an access right common to an application (external software, such as the server application 21 or the key management application 121) and an operator.

The "Authentication Information for Application" has an application ID identifying the application, associated with "application authentication information" concerning the authentication of the application identified by the application ID. The "application authentication information" includes information concerning a key used in the authentication, information indicating an algorithm of the encryption (decryption) used in the authentication, and a certificate of a public key when the authentication is performed with the public key. The information associated with the application ID in the "Authentication Information for Application" further includes information (the authentication, change of the key, creation of the execution right (for executing the command), the encryption of the communication path (the encryption of the command), etc.) concerning the cryptographic processing granted to the application identified by the application ID.

The application identified by the application ID is, for example, the client application 12, the server application 21, or the key management application 121. Since a set of the client application 12 and the server application 21 provides a service, one application ID identifies both the client application 12 and the server application 21.

The "Authentication Information for Operator Access" has an operator ID identifying the operator, associated with "operator authentication information" concerning the authentication of the operator identified by the operator ID. The "operator authentication information" includes information concerning a key used in the authentication, information indicating an algorithm of the encryption (decryption) used in the authentication, and a certificate of a public key when the authentication is performed with the public key. The information associated with the operator ID in the "Authentication Information for Operator Access" further includes a behavior granted to the operator identified by the operator ID, that is, information concerning the cryptographic processing granted to the operator (registration (addition), reference, change, deletion, etc. of keys).

As described above, the application ID identifying the application is associated with the information indicating the cryptographic processing granted to the application in the access control list. In addition, the operator ID (identification information) identifying the operator is associated with the information indicating the cryptographic processing granted to the operator in the access control list.

Fig. 15 is a flowchart showing the operation of the key management application 121 and the secure-chip processing module 23 when the operator operates the key management application 121 to register a key/access right (information indicating an access right to the key) in the secure-chip processing module 23.

In order for the operator, who is a service provider, to register the key/access right used in the cryptographic processing for providing a service in the key DB 116, the operator operates the key management application 121 (the computer in which the key management application 121 is installed) to access the secure-chip processing module 23 and inputs, for example, the operator ID assigned to the operator in advance.

The key management application 121 transmits the operator ID input by the operator to the secure-chip processing module 23. The authenticator 112 in the secure-chip processing module 23 receives the operator ID transmitted from the key management application 121. In Step S101, the authenticator 112 refers to the access control list (Fig. 14) to authenticate the operator (the operator identified by the operator ID transmitted from the client application 12) operating the key management application 121 in accordance with the "operator authentication information" associated with the operator ID transmitted from the key management application 121.

If the authentication of the operator succeeds in the authenticator 112, the secure-chip processing module 23 is ready to perform processing within a predetermined allowed range when the operator of which the authentication succeeds has access to the secure-chip processing module 23.

In other words, the secure-chip processing module 23 performs only the cryptographic processing granted to the operator (the key management application 121 operated by the operator) and is ready to grant access only to the key, the use of which is granted, in accordance with the information associated with the operator ID of which the authentication succeeds in the access control list (Fig. 14).

If the authentication of the operator fails in the authenticator 112, the secure-chip processing module 23 does not perform the subsequent processing.

When the operator operates the key management application 121 so as to request the registration of the key/access right, in Step S102, the key management application 121 transmits the request for the registration of the key/access right to the secure-chip processing module 23, along with the key/access right to be registered.

The key/access right to be registered is input by the operator who operates the key management application 121 and is transmitted to the secure-chip processing module 23. The key/access right may be stored in a computer in which the key management application 121 is installed as a file and the stored key/access right may be transmitted to the secure-chip processing module 23.

In Step S111, the secure chip processor 111 in the secure-chip processing module 23 receives the key/access right and the request for the registration of the key/access right, transmitted from the key management application 121. In Step S112, the secure chip processor 111 inquires of the authenticator 112 whether the registration of the key/access right to be registered is granted to the authenticated operator (the operator operating the key management application 121).

In Step S131, the authenticator 112 receives the inquiry supplied from the secure chip processor 111. In Step S132, the authenticator 112 refers to the access control list to confirm whether the registration of the key/access right is permitted to the authenticated operator, in response to the inquiry.

If the authenticator 112 confirms that the registration of the key/access right is permitted, then in Step S133, the authenticator 112 indicates to the secure chip processor 111 that the registration of the key/access right is permitted.

If the authenticator 112 does not confirm that the registration of the key/access right is permitted, the authenticator 112 indicates the confirmation result to the secure chip processor 111 and the secure-chip processing module 23 does not perform the subsequent processing.

In Step S113, the secure chip processor 111 receives the indication that the registration of the key/access right is permitted from the authenticator 112. In Step S114, the secure chip processor 111 transmits the key/access right transmitted from the key management application 121 to the cryptographic processor 114 to request the cryptographic processor 114 to register the key/access right.

In Step S141, the cryptographic processor 114 receives the key/access right transmitted from the secure chip processor 111. In Step S142, the cryptographic processor 114 decrypts the key/access right and supplies the decrypted key/access right to the key manager 115.

The key/access right transmitted from the key management application 121 to the secure-chip processing module 23 is encrypted with a key for key registration. When the key/access right is encrypted in a public key system, the key for key registration is the public key and the cryptographic processor 114 uses a secret key paired with the public key to decrypt the encrypted key/access right. When the key/access right is encrypted in a symmetric key (common key) system, the key for key registration is the common key and the cryptographic processor 114 uses the common key (a common key identical to the common key) to decrypt the encrypted key/access right.

The key used in the decryption of the encrypted key/access right (the secret key or the common key) is stored in the key DB 116. The cryptographic processor 114 requests the key used in the decryption of the key/access right from the key manager 115 to acquire the key from the key manager 115.

In Step S151, the key manager 115 encrypts the key/access right supplied from the cryptographic processor 114 and supplies the encrypted key/access right to the key DB 116 that stores the encrypted key/access right.

In Step S143, the cryptographic processor 114 transmits a message indicating that the registration of the key/access right terminates to the secure chip processor 111. In Step 5115, the secure chip processor 111 receives the message indicating that the registration of the key/access right terminates from the cryptographic processor 114. In Step S116, the secure chip processor 111 transmits the message to the key management application 121. In Step S103, the key management application 121 receives the message transmitted from the secure chip processor 111.

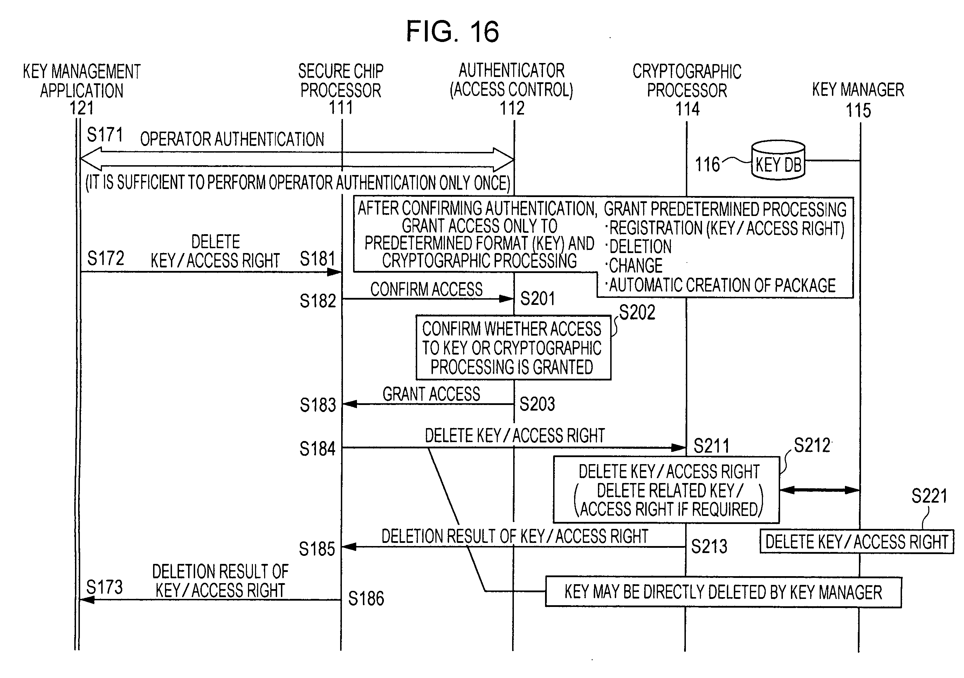

Fig. 16 is a flowchart showing the operation of the key management application 121 and the secure-chip processing module 23 when the operator operates the key management application 121 to delete the key/access right from the secure-chip processing module 23.

In order for the operator, who is a service provider, to delete the key/access right used in cryptographic processing from the key DB 116, the operator operates the key management application 121 to access the secure-chip processing module 23 and inputs, for example, the operator ID assigned to the operator in advance, as in the registration of the key/access right described with reference to Fig. 15.

The key management application 121 transmits the operator ID input by the operator to the secure-chip processing module 23. The authenticator 112 in the secure-chip processing module 23 receives the operator ID transmitted from the key management application 121. In Step S171, the authenticator 112 refers to the access control list (Fig. 14) to authenticate the operator operating the key management application 121 in accordance with the "operator authentication information" associated with the operator ID transmitted from the key management application 121.

If the authentication of the operator succeeds in the authenticator 112, the secure-chip processing module 23 is ready to perform processing within a predetermined allowed range when the operator of which the authentication succeeds has access to the secure-chip processing module 23.

In other words, the secure-chip processing module 23 performs only the cryptographic processing granted to the operator (the key management application 121 operated by the operator) and is ready to grant access only to the key, the use of which is granted, in accordance with the information associated with the operator ID of which the authentication succeeds in the access control list (Fig. 14).

If the authentication of the operator fails in the authenticator 112, the secure-chip processing module 23 does not perform the subsequent processing.

When the operator operates the key management application 121 so as to request the deletion of the key/access right, in Step S172, the key management application 121 transmits the request for the deletion of the key/access right to the secure-chip processing module 23, along with ken information (for example, the key ID and the key version) concerning the key to be deleted.

The key information concerning the key to be deleted is input by the operator who operates the key management application 121.

In Step S181, the secure chip processor 111 in the secure-chip processing module 23 receives the request for the deletion of the key/access right and the key information transmitted from the key management application 121. In Step S182, the secure chip processor 111 inquires of the authenticator 112 whether the deletion of the key/access right to be deleted is granted to the authenticated operator.

In Step S201, the authenticator 112 receives the inquiry supplied from the secure chip processor 111. In Step S202, the authenticator 112 refers to the access control list to confirm whether the deletion of the key/access right is permitted to the authenticated operator, in response to the inquiry.

If the authenticator 112 confirms that the deletion of the key/access right is permitted, then in Step S203, the authenticator 112 indicates to the secure chip processor 111 that the deletion of the key/access right is permitted.

If the authenticator 112 does not confirm that the deletion of the key/access right is permitted, the authenticator 112 indicates the confirmation result to the secure chip processor 111 and the secure-chip processing module 23 does not perform the subsequent processing.

In Step S183, the secure chip processor 111 receives the indication that the deletion of the key/access right is permitted from the authenticator 112. In Step S184, the secure chip processor 111 transmits the key information transmitted from the key management application 121 to the cryptographic processor 114 to request the cryptographic processor 114 to delete the key/access right identified by the key information.

In Step S211, the cryptographic processor 114 receives the key information transmitted from the secure chip processor 111. In Step S212, the cryptographic processor 114 requests the key manager 115 to delete the key/access right identified by the key information.

The cryptographic processor 114 requests the key manager 115 to delete, in addition to the key/access right identified by the key information transmitted from the secure chip processor 111, key/access rights related to the key/access right, if needed. In other words, when the key identified by the key information transmitted from the secure chip processor 111 is, for example, an area key used for accessing the area definition region in a certain layer, the cryptographic processor 114 requests the key manager 115 to delete, in addition to the area key, the area keys of the area definition region(s) and the service keys of the service definition region(s) under the area definition region, if needed.

The deletion of the key/access right may be directly requested from the secure chip processor 111, not from the cryptographic processor 114, to the key manager 115.

In Step S221, the key manager 115 deletes the key/access right, requested from the cryptographic processor 114, from the key DB 116.

In Step S213, the cryptographic processor 114 transmits a message indicating that the deletion of the key/access right terminates to the secure chip processor 111. In Step S185, the secure chip processor 111 receives the message indicating that the deletion of the key/access right terminates from the cryptographic processor 114. In Step S186, the secure chip processor 111 transmits the message to the key management application 121. In Step S173, the key management application 121 receives the message transmitted from the secure chip processor 111.

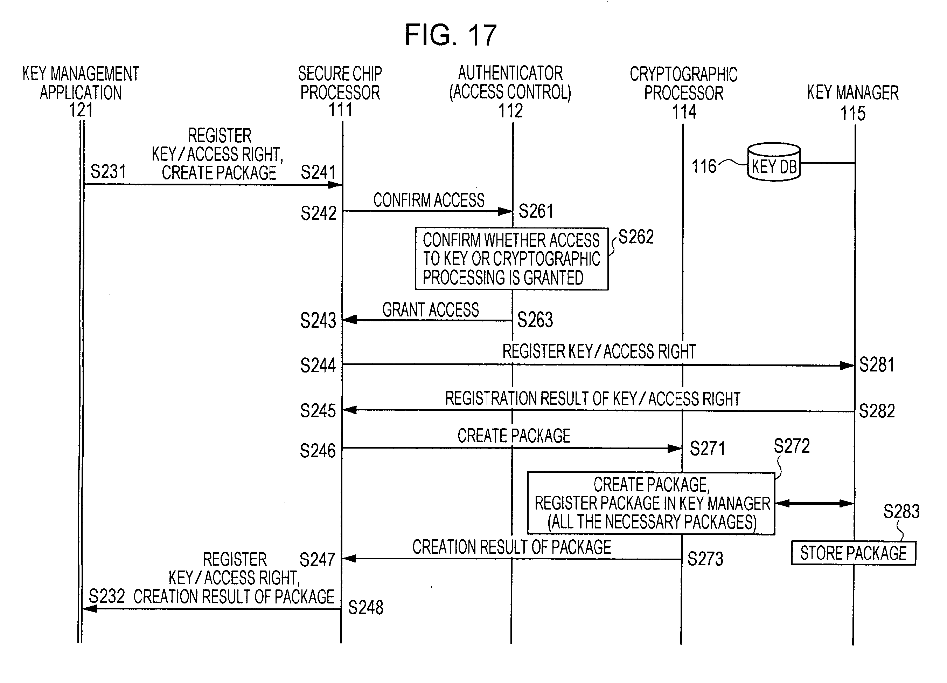

Fig. 17 is a flowchart showing the operation of the key management application 121 and the secure-chip processing module 23 when the operator operates the key management application 121 to request the secure-chip processing module 23 to generate a package including the warrant indicating the execution right for executing a certain command and to register the key/access right of the key used in the encryption of the warrant included in the package.

It is assumed in Fig. 17 that the authentication of the operator operating the key management application 121, described with reference to Figs. 15 and 16, has been already performed in the authenticator 112 in the secure-chip processing module 23 and that the authentication of the operator succeeds.

When the operator operates the key management application 121 so as to request the generation of a package including the warrant indicating the execution right for executing a certain command and the registration of the key/access right of the key used in the authentication of the warrant included in the package, then in Step S231, the key management application 121 transmits the request for the generation of the package and the registration of the key/access right to the secure-chip processing module 23, along with the key/access right to be registered.

The key/access right to be registered is input by the operator who operates the key management application 121 and is transmitted to the secure-chip processing module 23. The key/access right may be stored in a computer in which the key management application 121'is installed as a file and the stored key/access right may be transmitted to the secure-chip processing module 23.

In Step S241, the secure chip processor 111 in the secure-chip processing module 23 receives the key/access right, the request for the registration of the key/access right, and the request for the generation of the package, transmitted from the key management application 121. In Step S242, the secure chip processor 111 inquires of the authenticator 112 whether the registration of the key/access right to be registered and the generation of the package to be generated are granted to the authenticated operator (the operator operating the key management application 121).

In Step S261, the authenticator 112 receives the inquiry supplied from the secure chip processor 111. In Step S262, the authenticator 112 refers to the access control list to confirm whether the registration of the key/access right and the generation of the package are permitted to the authenticated operator, in response to the inquiry.

If the authenticator 112 confirms that the registration of the key/access right and the generation of the package are permitted, then in Step S263, the authenticator 112 indicates to the secure chip processor 111 that the registration of the key/access right and the generation of the package are permitted.

If the authenticator 112 does not confirm that the registration of the key/access right and the generation of the package are permitted, the authenticator 112 indicates the confirmation result to the secure chip processor 111 and the secure-chip processing module 23 does not perform the subsequent processing.

In Step S243, the secure chip processor 111 receives the indication that the registration of the key/access right and the generation of the package are permitted from the authenticator 112. In Step S244, the secure chip processor 111 transmits the key/access right transmitted from the key management application 121 to the key manager 115 to request the key manager 115 to register the key/access right.

In Step S281, the key manager 115 receives the key/access right transmitted from the secure chip processor 111 and encrypts the received key/access right. The key manager 115 supplies the encrypted key/access right to the key DB 116 that stores the encrypted key/access right.

In Step S282, the key manager 115 transmits a message indicating that the registration of the key/access right terminates to the secure chip processor 111. In Step S245, the secure chip processor 111 receives the message indicating that the registration of the key/access right terminates from the key manager 115. In Step S246, the secure chip processor 111 requests the cryptographic processor 114 to generate the package.

In Step S271, the cryptographic processor 114 receives the request for the generation of the package from the secure chip processor 111. In Step S272, the cryptographic processor 114 generates a warrant indicating the execution right for executing a certain command and a certificate verifying the validity of the warrant. The cryptographic processor 114 requests the key registered (stored) in the key DB 116 in Step S281 from the key manager 115 to acquire the key and uses the key to encrypt the warrant. The cryptographic processor 114, then, supplies a set of the encryption result of the warrant and the certificate as a package to the key manager 115.

In Step S283, the key manager 115 stores the package supplied from the cryptographic processor 114 in the key DB 116.

In Step S273, the cryptographic processor 114 transmits a message indicating that the generation of the package terminates to the secure chip processor 111. In Step S247, the secure chip processor 111 receives the message indicating that the generation of the package terminates from the cryptographic processor 114. In Step S248, the secure chip processor 111 transmits a message indicating that the registration of the key/access right and the generation of the package terminate to the key management application 121. In Step S232, the key management application 121 receives the message transmitted from the secure chip processor 111.

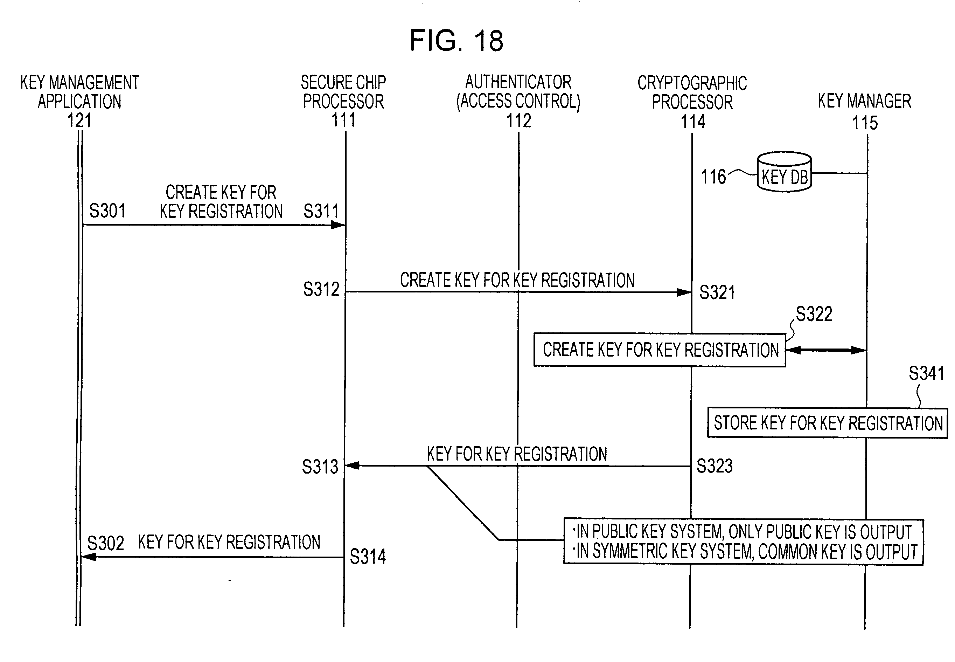

Fig. 18 is a flowchart showing the operation of the key management application 121 and the secure-chip processing module 23 when the operator operates the key management application 121 to request the secure-chip processing module 23 to generate the key for key registration described above with reference to Fig. 15.

It is assumed also in Fig. 18 that the authentication of the operator operating the key management application 121, described with reference to Figs. 15 and 16, has been already performed in the authenticator 112 in the secure-chip processing module 23 and that the authentication of the operator succeeds. It is further assumed in Fig. 18 that the secure-chip processing module 23 has already confirmed that the generation of the key for key registration is permitted to the authenticated operator by referring to the access control list.

When the operator operates the key management application 121 so as to request the generation of the key for key registration, in Step S301, the key management application 121 transmits the request for the generation of the key for key registration to the secure-chip processing module 23.

In Step S311, the secure chip processor 111 in the secure-chip processing module 23 receives the request for the generation of the key for key registration, transmitted from the key management application 121. In Step S312, the secure chip processor 111 supplies the request to the cryptographic processor 114.

In Step S321, the cryptographic processor 114 receives the request for the generation of the key for key registration from the secure chip processor 111. In Step S322, the cryptographic processor 114 generates a public key and a secret key in the public key system or a common key in the symmetric key system, described above, as the key for key registration. The cryptographic processor 114 supplies the key for key registration (the secret key or the common key) to the key manager 115.

In Step S341, the key manager 115 encrypts the key for key registration supplied from the cryptographic processor 114 and supplies the encrypted key for key registration to the key DB 116 that stores the encrypted key for key registration.

In Step S323, the cryptographic processor 114 transmits the key for key registration (the public key or the common key) to the secure chip processor 111. The cryptographic processor 114 may encrypt the key for key registration to transmit the encrypted key for key registration to the secure chip processor 111.

In Step S313, the secure chip processor 111 receives the key for key registration from the cryptographic processor 114. In Step S314, the secure chip processor 111 transmits the key for key registration to the key management application 121. In S302, the key management application 121 receives the key for key registration from the secure chip processor 111 and holds the received key for key registration.

There are cases where the operators, who are service providers, include operators as assistants who perform operations for registering the keys in accordance with instructions issued from the service providers and operators as key managers who manage the assistants and the keys, as described above.

When the assistant performs the operation for registering the key/access right, described with reference to Fig. 15, the assistant may possibly know the content of the key if the key to be registered is supplied to the assistant in the form of the plain text.

The key manager performs the operation for registering the key for key registration, described with reference to Fig. 18, uses the registered key for key registration to encrypt the key to be registered in the secure-chip processing module 23, and supplies the encrypted key to the assistant in order to prevent the assistant from knowing the key to be registered.

As described above, in the secure-chip processing module 23, it is possible to easily manage the operations permitted to the operator in the authentication of the operator by preparing the access control list including the group of the key information (the key ID and the key version), the usage of the key information (the operation of the key (the registration, change, deletion, etc.) and the cryptographic processing (the authentication, the encryption, the creation of the warrant, etc.)), the authentication method of a person (operator) who utilizes the key information and software, and the key information required for the authentication (the key ID, the key version, the certificate, etc.) and by collectively managing the key information (the key ID, the key version, and the value of the key), the usage of the key information (the operation of the key (the registration, change, deletion, etc.) and the cryptographic processing (the authentication, the encryption, the creation of the warrant, etc.)), and the authentication method of the operator and software in accordance with the access control list.

In addition, associating the operator ID of the operator being in charge of the operation relating to the service provided by a service provider with the information permitting only the operation relating to the service in the access control list allows the access to the group of the key information (the key ID and the key version), the registration or deletion of the key, and so on by the operator to be permitted in a flexible level, for example, in units of services.

The access to the secure-chip processing module 23 from the application may be managed independent of the access to the secure-chip processing module 23 by the operator who performs the operation relating to the key operation. However, the independent management of such accesses makes unified management and unified achievement of the security difficult. Furthermore, it is necessary to perform the maintenance of the access to the secure-chip processing module 23 from the application separately from the maintenance of the access to the secure-chip processing module 23 from the operator.

Accordingly, the secure-chip processing module 23 collectively manages the access to the secure-chip processing module 23 from the application and the access to the secure-chip processing module 23 from the operator with the access control list. Such collective management with the access control list can improve the security and the maintenance relating to the access to the keys.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus (23) performing cryptographic processing for providing a service by using an integrated circuit chip, the information processing apparatus (23) comprising:
authentication means (112) for authenticating an operator operating an external device;
storage means (113) for storing an access control list that has identification information, identifying the operator, associated with information indicating the cryptographic processing permitted to the operator;
confirmation means for referring to the access control list to confirm whether the cryptographic processing requested from the authenticated operator is permitted; and
cryptographic processing means (114) for performing the cryptographic processing when the cryptographic processing requested from the operator is permitted.

2. An information processing method in an information processing apparatus performing cryptographic processing for providing a service by using an integrated circuit chip, the information processing method comprising the steps of:
authenticating an operator operating an external device;
referring to an access control list that has identification information, identifying the operator, associated with information indicating the cryptographic processing permitted to the operator to confirm whether the cryptographic processing requested from the authenticated operator is permitted; and
performing the cryptographic processing when the cryptographic processing requested from the operator is permitted.

3. A program causing a computer to execute cryptographic processing for providing a service by using an integrated circuit chip, the program comprising the steps of:
authenticating an operator operating an external device;
referring to an access control list that has identification information, identifying the operator, associated with information indicating the cryptographic processing permitted to the operator to confirm whether the cryptographic processing requested from the authenticated operator is permitted; and
performing the cryptographic processing when the cryptographic processing requested from the operator is permitted.

4. An information processing apparatus (23) performing cryptographic processing for providing a service by using an integrated circuit chip, the information processing apparatus comprising:
an authentication unit (112) authenticating an operator operating an external device;
a storage unit (113) storing an access control list that has identification information, identifying the operator, associated with information indicating the cryptographic processing permitted to the operator;
a confirmation unit referring to the access control list to confirm whether the cryptographic processing requested from the authenticated operator is permitted; and
a cryptographic processing unit (114) performing the cryptographic processing when the cryptographic processing requested from the operator is permitted.
